# EUROPÄISCHE PATENTANMELDUNG

(11) **EP 4 765 605 A1**
(43) Veröffentlichungstag der Anmeldung: **24.06.2026**
(21) Anmeldenummer: 25226745.5
(22) Anmeldetag: 23.12.2025
(51) Int. Cl.: H02M 1/10, H02M 7/219, H02M 5/297, H02M 7/217, H02M 7/48, H02M 7/797

(54) **LEISTUNGSWANDLERVORRICHTUNG**

(30) Priorität: 23.12.2024 DE 102024139646
(71) Anmelder: Technische Hochschule Köln Körperschaft des öffentlichen Rechts, 50968 Köln (DE)
(72) Erfinder: Dick, Christian, 50354 Hürth (DE); Bohne, David, 50939 Köln (DE)
(74) Vertreter: Ostermann, Thomas

(57) **Zusammenfassung**

Die Erfindung betrifft eine Leistungswandlervorrichtung aufweisend: eine netzseitige Eingangsschaltung mit einer Anzahl von bidirektional sperrfähigen Schaltelementen, eine lastseitige Ausgangsschaltung mit einer Anzahl von Halbleitern, eine Transformatorschaltung, der primärseitig mit der Eingangsschaltung und sekundärseitig mit der lastseitigen Ausgangsschaltung gekoppelt ist, eine Ansteuerschaltung zur Ansteuerung der bidirektional sperrfähigen Schaltelemente der Eingangsschaltung und der steuerbaren Schaltelemente der Ausgangsschaltung, so dass eine netzseitige Wechselgröße in eine lastseitige Gleichgröße und/oder vice versa umgewandelt wird, wobei die netzseitige Eingangsschaltung fünf bidirektionale Schaltelemente aufweist, wobei ein Netzanschluss einer ersten Phase über ein erstes bidirektionales Schaltelement mit einer ersten Ausgangsklemme der Eingangsschaltung verbunden ist, wobei weitere Netzanschlüsse zweier Phasen jeweils über ein bidirektionales Schaltelement mit einer zweiten Ausgangsklemme der Eingangsschaltung verbunden sind, wobei ein viertes bidirektionales Schaltelement die erste Ausgangsklemme mit einer Masse oder einem Neutralleiter und ein fünftes bidirektionales Schaltelement die zweite Ausgangsklemme mit der Masse oder mit dem Neutralleiter verbindet, dass die netzseitige Eingangsschaltung eine Anzahl von Zustandsschaltern aufweist, wobei ein erster Zustandsschalter zwischen der ersten Phase und der zweiten Phase und/oder wobei ein zweiter Zustandsschalter zwischen der ersten Phase und der dritten Phase angeordnet ist, und dass der erste Zustandsschalter und/oder der zweite Zustandsschalter derart schaltbar sind, dass in einem ersten Schaltzustand die Eingangsschaltung an einem dreiphasigen Netz betreibbar ist oder in einem zweiten Schaltzustand die Eingangsschaltung an einem zweiphasigen Netz betreibbar ist oder in einem dritten Schaltzustand die Eingangsschaltung an einem einphasigen Netz betreibbar ist.

## Beschreibung

Die Erfindung betrifft eine Leistungswandlervorrichtung nach dem Oberbegriff des Patentanspruchs 1.

Aus der EP 4 462 664 A1 ist eine Leistungswandlervorrichtung bekannt, die in üblicherweise zweistufig ausgebildet ist. In einer ersten Stufe wird aus einer Wechselspannung eine gleichgerichtete Spannung erzeugt, die vorzugsweise an einer Kapazität abfällt. In einer zweiten Stufe wird die gleichgerichtete Spannung unter galvanischer Trennung über einen Trafo als eine gleichgerichtete Ausgangsspannung übertragen. Um dem Bauteileaufwand zu reduzieren, sieht die bekannte Leistungswandlervorrichtung vor, dass die erste Stufe eine Schalteinrichtung sowie eine Resonanzeinrichtung aufweist. Dadurch, dass die Schalteinrichtung bidirektional sperrfähige Schaltelemente (BDS) aufweist, die in der Lage sind, in Abhängigkeit von einem Steuersignal in zwei unterschiedlichen Richtungen zu leiten oder zu sperren, kann der Bauteileaufwand reduziert werden.

Eine vergleichbare Leistungswandlervorrichtung ist aus dem Artikel "Novel Bidirectional Single-Stage Isolated 600-V GaN M-BDS-Based Single-/Three-Phase-Operable EV On-Board Charger" von Sven Weihe, David Menzi, Jonas Huber, Daifei Zhang, Johann W. Kolar, Matthias Kasper, Kennith Kin Leong, Gerald Deboy veröffentlicht in PCIM Europe 2024, pp. 330-337, 11-13 June 2024. Nachteilig an der bekannten Leistungswandlervorrichtung ist, dass insbesondere für die dreiphasige Gleichrichtung mit jeweils einer Phase zugeordneten zwei bidirektional sperrfähigen Schaltelementen der Bauteileaufwand relativ hoch ist.

Aus der EP 2 050 185 B1 ist eine Leistungswandlervorrichtung mit einer Eingangsschaltung, einem Schwingkreis, einem Transformator und einem Gleichrichter bekannt, wobei die netzseitige Eingangsschaltung eine Anzahl von bidirektionalen Schaltelementen aufweist, die jeweils zwischen netzseitigen Phaseneingängen und einer Ausgangsklemme der Eingangsschaltung angeordnet sind. Die bekannte Eingangsschaltung ist als eine Halbbrückenschaltung ausgebildet. Sekundärseitig ist der Transformator mit einer lastseitigen Ausgangsschaltung gekoppelt, die als Gleichrichter ausgebildet ist. Nachteilig an der bekannten Leistungswandlervorrichtung ist, dass der Bauteileaufwand relativ groß ist und dass die Leistungswandlung auf eine dreiphasige Topologie beschränkt ist.

Aufgabe der vorliegenden Erfindung ist es, eine Leistungswandlervorrichtung derart weiterzubilden, dass der Bauteileaufwand weiter reduziert wird und dass die Leistungswandlervorrichtung für Topologien mit einer unterschiedlichen Phasenanzahl geeignet ist.

Zur Lösung dieser Aufgabe weist die Erfindung die Merkmale des Patentanspruchs 1 auf.

Nach der Erfindung sind neben den bidirektionalen Schaltelementen je Phase zusätzlich eine Anzahl von Zustandsschaltern vorgesehen, wobei der Zustandsschalter zwischen einer ersten Phase und einer zweiten Phase einerseits und/oder einer ersten Phase und einer dritten Phase andererseits angeordnet ist. Je nach Schaltzustand dieser Zusatzschalter kann die Leistungswandlervorrichtung an einen dreiphasigen Netzanschluss oder einen zweiphasigen Netzanschluss oder einen einphasigen Netzanschluss angeschlossen werden. Die erfindungsgemäße Leistungswandlervorrichtung ist somit universell einsetzbar.

Nach der Erfindung weist eine netzseitige Eingangsschaltung fünf bidirektional sperrfähige Schaltelemente auf, mittels derer es ermöglicht wird, dass wahlweise die Leistungswandlervorrichtung an einem dreiphasigen, zweiphasigen oder einphasigen Netz arbeiten kann. Unabhängig von der Anzahl der Phasen wird vorzugsweise lediglich ein einziger Hochfrequenz-Transformator zwischen der netzseitigen Eingangsschaltung und der lastseitigen Ausgangsschaltung eingesetzt. Die Eingangsschaltung wird mittels einer Ansteuerschaltung derart angesteuert, dass Netzströme netzkonform geregelt werden und gleichzeitig die Leistungsübertragung über den sich an die netzseitige Eingangsschaltung anschließenden Hochfrequenz-Wechselkreis erfolgt. Hierzu erfolgt eine abgestimmte Modulation einer der netzseitigen Eingangsschaltung zugeordneten Teilschaltung des Hochfrequenz-Wechselkreises. Die Leistungswandlervorrichtung kann insbesondere als klassische Dual-Active-Bridge (DAB) oder als Resonanzwandler arbeiten.

Zur Lösung der Aufgabe weist die Erfindung die Merkmale des Patentanspruchs 7 auf.

Nach der Erfindung weist die netzseitige Eingangsschaltung fünf bidirektionale Schaltelemente auf, wobei die fünf bidirektionalen Schaltelemente derart angeordnet sind, dass die netzseitige Eingangsschaltung eine dreiphasige Topologie aufweist und damit die Leistungswandlervorrichtung an ein Dreiphasennetz angeschlossen werden kann. Ein erstes bidirektionales Schaltelement ist zwischen einer ersten Ausgangsklemme der Eingangsschaltung und einem ersten Netzanschluss angeordnet. Ein zweites bidirektionales Schaltelement ist zwischen einem zweiten Netzanschluss und einer zweiten Ausgangsklemme der Eingangsschaltung angeordnet. Ein drittes bidirektionales Schaltelement ist zwischen einem dritten Netzanschluss und der zweiten Ausgangsklemme der Eingangsschaltung angeordnet. Ein viertes bidirektionales Schaltelement ist zwischen der ersten Ausgangsklemme der Eingangsschaltung und einer Masse oder einem optionalen Neutralleiter angeordnet. Ein fünftes bidirektionales Schaltelement ist zwischen der zweiten Ausgangsklemme der Eingangsschaltung und der Masse bzw. optionalen Neutralleiter angeordnet. Vorteilhaft kann hierdurch mit einer reduzierten Anzahl von Schaltelementen eine Wechselrichtung erfolgen.

Nach einer bevorzugten Ausführungsform der Erfindung sind die bidirektionalen Schaltelemente jeweils als bidirektional sperrfähige Schaltelemente ausgebildet, die jeweils dazu eingerichtet sind, in Abhängigkeit von zwei Steuersignalen den elektrischen Strom in zwei unterschiedliche Richtungen zu sperren und zu leiten. Die bidirektional sperrfähigen Schaltelemente werden somit mit zwei Steuersignalen beaufschlagt. Die bidirektional sperrfähigen Schaltelemente weisen somit jeweils zwei Gate-Anschlüsse auf. Sie sind als monolithische Schalter ausgebildet, wobei unterschiedlich dotierte Halbleiterschichten auf einem gemeinsamen Substrat angeordnet sind. In Abhängigkeit von dem Zustand der beiden Gate-Anschlüsse kann das bidirektionale Schaltelement als Schalter im Offen- oder Geschlossen-Modus einerseits oder als Diode in Durchlass- oder Sperrrichtung andererseits betrieben werden. Vorteilhaft kann hierdurch der Bauteileaufwand weiter reduziert werden.

Nach einer Weiterbildung der Erfindung sind die steuerbaren Schaltelemente der Ausgangsschaltung als unidirektional sperrfähige Schaltelemente ausgebildet, beispielsweise als MOSFETs.

Nach einer Weiterbildung der Erfindung ist zwischen der Eingangsschaltung und der Ausgangsschaltung zumindest eine Induktivität und eine Kapazität in Reihe angeordnet, so dass ein Serienresonanzkreis erzeugt wird. Die Ansteuerschaltung weist Ansteuermittel auf, so dass ein am Eingang der Eingangsschaltung fließender Netzstrom durch gezieltes Beeinflussen der Resonanzstromamplitude des Serienresonanzkreises geregelt werden kann. Mit einer Vollbrücke in der Ausgangsschaltung und einem Freilaufschalter in der Eingangsschaltung können beide Schaltungen, betrieben bei oder nahe der Resonanzfrequenz, diverse Spannungen an den Resonanzkreis eingangs oder ausgangsseitig anlegen, insbesondere auch 0 V. Die resultierende Differenzspannung über den Resonanzelementen führt zu einem Aufschwingen oder Abschwingen von Resonanzstrom und Resonanzkondensatorspannung, sodass insbesondere die Stromamplitude "atmet". Mit der aus anderen Schaltungen bekannten Quantum Control Methode oder Integral Cycle Mode Control Methode kann entsprechend auch hier die Resonanzstromamplitude in einem Toleranzband geregelt werden, und somit auch der gleitende Mittelwert des ausgekoppelten Netzstromes jeder Netzphase.

Ausführungsbeispiele der Erfindung werden nachfolgend anhand der Zeichnungen näher erläutert.

Es zeigen:
- Fig. 1: ein Blockschaltbild einer erfindungsgemäßen einstufigen Leistungswandlervorrichtung mit einer netzseitigen Eingangsschaltung, einem Hochfrequenz-Transformator und einer lastseitigen Ausgangsschaltung,
- Fig. 2a: eine dreiphasige Eingangsschaltung mit einem Freilaufschaltelement,
- Fig. 2b: eine dreiphasige Eingangsschaltung ohne Freilaufschaltelement,
- Fig. 3a: eine zweiphasige Eingangsschaltung mit einem Freilaufschaltelement,
- Fig. 3b: eine zweiphasige Eingangsschaltung ohne Freilaufschaltelement,
- Fig. 4: eine einphasige Eingangsschaltung mit einem Freilaufschaltelement,
- Fig. 5: eine Halbbrückenschaltung mit Mittelanzapfung als Ausgangsschaltung,
- Fig. 6: ein Serienresonanzkreis in der Transformatorschaltung,
- Fig. 7: eine Leistungswandlervorrichtung mit einer dreiphasigen Eingangsschaltung, wobei sich Zustandsschalter der Eingangsschaltung sich in einem ersten Schaltzustand befinden,
- Fig. 8a: die Leistungswandlervorrichtung gemäß Figur 7, wobei sich die Zustandsschalter in einem zweiten Schaltzustand befinden, so dass die Eingangsschaltung an einem ersten Phaseneingang und an einem zweiten Phaseneingang angeschlossen ist,
- Fig. 8b: die Leistungswandlervorrichtung gemäß Figur 7, wobei sich die Zustandsschalter in einem zweiten Schaltzustand befinden, so dass die Eingangsschaltung an einem ersten Phaseneingang und an einem dritten Phaseneingang des Netzes angeschlossen ist,
- Fig. 8c: die Leistungswandlervorrichtung gemäß Figur 7, wobei sich die Zustandsschalter in einem zweiten Schaltzustand befinden, so dass die Eingangsschaltung an einem zweiten Phaseneingang und an einem dritten Phaseneingang des Netzes angeschlossen ist,
- Fig. 9a: die Leistungswandlervorrichtung gemäß Figur 7, wobei sich die Zustandsschalter in einem dritten Schaltzustand der Zustandsschalter befinden, so dass die Eingangsschaltung an einem ersten Phaseneingang angeschlossen ist,
- Fig. 9b: die Leistungswandlervorrichtung gemäß Figur 7, wobei sich die Zustandsschalter in einem dritten Schaltzustand der Zustandsschalter befinden, so dass die Eingangsschaltung an einem zweiten Phaseneingang angeschlossen ist,
- Fig. 9c: die Leistungswandlervorrichtung gemäß Figur 7, wobei sich die Zustandsschalter in einem dritten Schaltzustand der Zustandsschalter befinden, so dass die Eingangsschaltung an einem dritten Phaseneingang angeschlossen ist,
- Fig. 10a: ein Strom-/Spannungsverlauf bei einer dreiphasigen Topologie gemäß Figur 7, wobei die bidirektionalen Schaltelemente Q1, Q2, Q3, Q4 zeitweise eingeschaltet sind,
- Fig. 10b: ein Strom-/Spannungsverlauf bei einer dreiphasigen Topologie gemäß Figur 7, wobei die bidirektionalen Schaltelemente Q1, Q2, Q3, Q4, Q5 zeitweise eingeschaltet sind,
- Fig. 10c: ein Strom-/Spannungsverlauf bei einer dreiphasigen Topologie gemäß Figur 7, wobei die bidirektionalen Schaltelemente Q1, Q2, Q3, Q4, Q5 zeitweise eingeschaltet sind,
- Fig. 11: ein Spannungsstromverlauf bei einer Halbbrückenschaltung gemäß Figur 4 der Leistungswandlervorrichtung und
- Fig. 12: ein Strom-/Spannungsverlauf für den Schaltzustand der Leistungswandlervorrichtung der Eingangsschaltung gemäß Figuren 9a bis 9c, wobei der Effektivwert einer Eingangsspannung U₁ des Resonanzkreises halb so groß ist wie bei einer Halbbrückenschaltung.

Eine Leistungswandlervorrichtung hat eine Gleichrichterfunktion, wenn in einem Stromnetz 1 vorliegende Wechselspannungen U_{N} und Wechselströme I_{N} gleichgerichtet werden zu einer Gleichspannung U_{d}, mit der beispielsweise eine Batterie eines Elektrofahrzeugs aufgeladen wird. Darüber hinaus dient die erfindungsgemäße Leistungswandlervorrichtung als Wechselrichter, so dass die Gleichspannung U_{d}, in eine Wechselspannung umgewandelt wird, der in das Stromnetz 1 eingespeist wird. Die erfindungsgemäße Leistungswandlervorrichtung ermöglicht somit den Leistungsfluss in zwei unterschiedliche Richtungen.

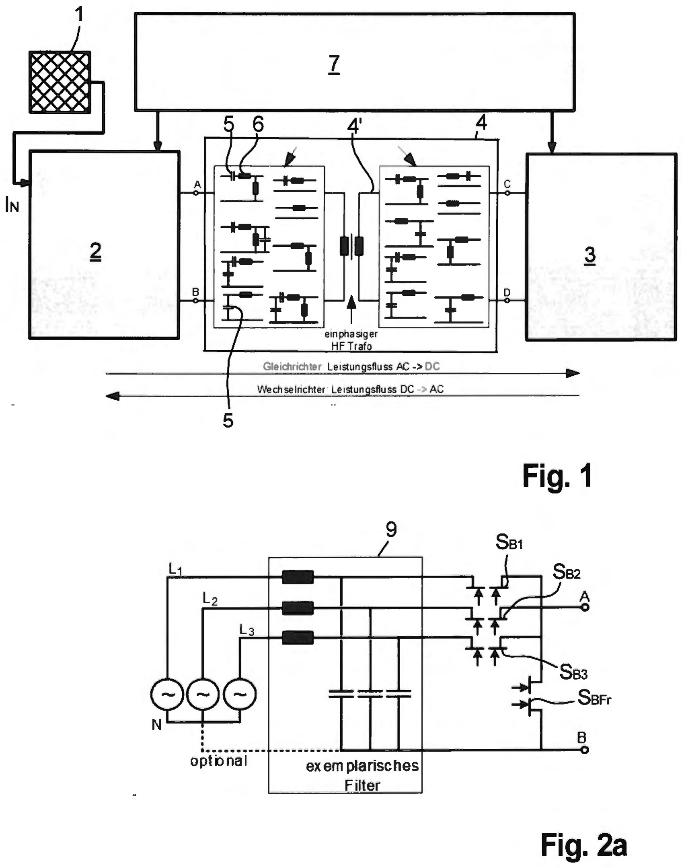

Die Leistungswandlervorrichtung weist eine netzseitige Eingangsschaltung 2, eine lastseitige Ausgangsschaltung 3 und eine zwischen der Eingangsschaltung 2 und der Ausgangsschaltung 3 angeordnete HF-Transformatorschaltung 4 auf. Im einfachsten Fall kann die HF-Transformatorschaltung lediglich einen Hochfrequenz-Transformator 4' aufweisen, der als einphasiger Hochfrequenz-Transformator ausgebildet ist. Wie in Figur 1 dargestellt, weist die HF-Transformatorschaltung 4 zusätzliche optionale Bauelemente, nämlich Kapazitäten 5 sowie Induktivitäten 6 auf.

Ferner umfasst die Leistungswandlervorrichtung eine Ansteuerschaltung 7, mittels derer die Eingangsschaltung 2 und die Ausgangsschaltung 3 angesteuert werden.

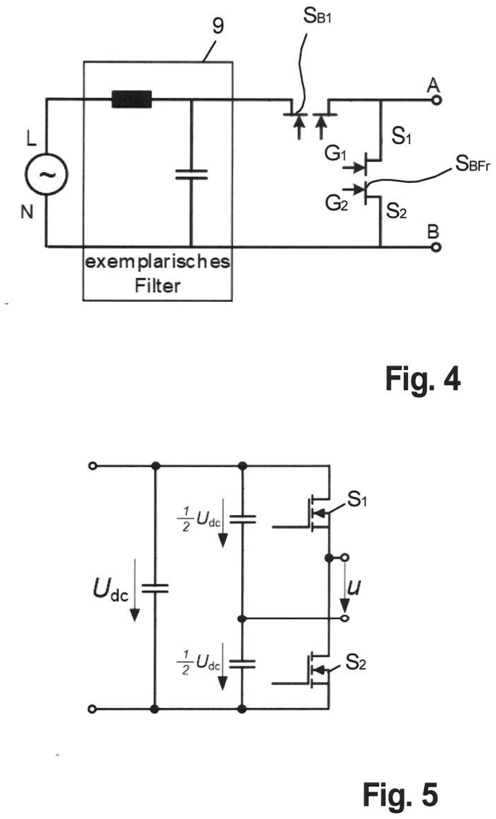

Die Ausgangsschaltung 3 kann beispielsweise eine Halbbrückenschaltung als Halbbrücke und Mittelpunkt angezapften Zwischenkreiskondensatoren aufweisen mit zwei herkömmlichen unidirektional steuerbaren Schaltelementen S₁, S₂ gemäß Figur 5. Bei den unidirektional steuerbaren Schaltelementen S₁, S₂ kann es sich beispielsweise um MOSFETs-Schaltbauteile handeln.

Nach einer alternativen Ausführungsform kann statt des steuerbaren Schaltelementes S1 und/oder S2 ein Halbleiterelement, insbesondere eine Diode, eingesetzt werden.

Alternativ kann die Ausgangsschaltung 3 andere Gleichrichterschaltungen basierend auf MOSFETs, IGBTs, GaN HEMT oder GaN GIT aufweisen oder auch Dioden aufweisen. Beispielsweise kann die Ausgangsschaltung 3 durch eine Vollbrückenschaltung oder eine Zweipuls-Mittelpunktschaltung mit mittelpunktangezapftem HF-Transformator und Dioden oder aktiven Halbleiterbausteinen ausgebildet sein.

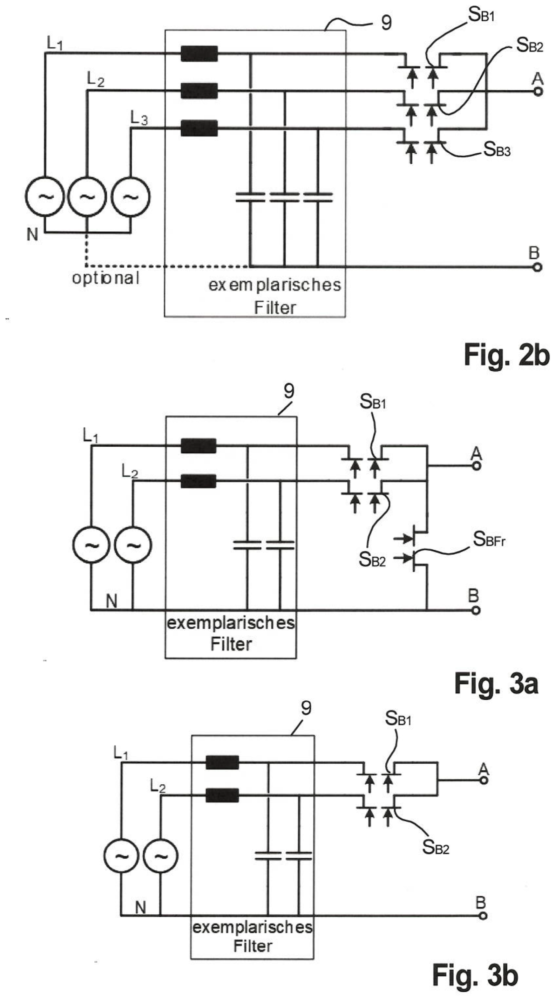

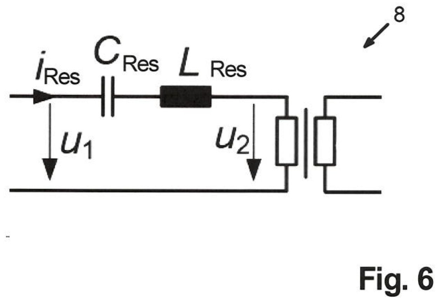

Die Eingangsschaltung 2 weist nach einer ersten Ausführungsform unter Anschluss an einem dreiphasigen Netz 1 je Phase ein einziges bidirektional sperrfähiges Schaltelement S_{B1}, S_{B2}, S_{B3} auf. Die bidirektional sperrfähigen Schaltelemente S_{B1}, S_{B2}, S_{B3} sind jeweils an einer Phase L1, L2, L3 des Netzes 1 angeschlossen, wobei sie zusammengeführt werden zu einer ersten Klemme A (Ausgangsklemme) der Eingangsschaltung 2. Zusätzlich ist zwischen der ersten Klemme A (Ausgangsklemme) und einer zweiten Klemme B (zweite Ausgangsklemme) der Eingangsschaltung 2 ein weiteres bidirektional sperrfähiges Schaltelement als Freilaufschaltelement S_{BFr} angeordnet. In einer alternativen Ausführungsform gemäß Figur 2b entfällt dieses Freilaufschaltelement S_{SFr}. Das Freilaufschaltelement S_{BFr} ist dann erforderlich, wenn in der Steuerung ein höheres Maß an Freiheitsgraden gewünscht ist, zum Beispiel wenn gemäß einer Ausführungsform der Erfindung die Transformatorschaltung 4 zusätzlich einen Serienschwingkreis 8 gemäß Figur 6 bestehend aus einer Kapazität C_{RES} und Induktivität L_{RES} aufweist, was im Folgenden näher beschrieben wird. Das Freilaufschaltelement S_{SFr} ist zwischen der ersten Klemme A und der zweiten Klemme B geschaltet, so dass ein erster Anschluss des Freilaufschaltelementes S_{BFr} mit dem weiteren bidirektional sperrfähigen Schaltelement S_{B1}, S_{B2}, S_{B3} verbunden ist und ein zweiter Anschluss mit dem Neutralleiter N des Stromnetzes 1.

Optional kann die Eingangsschaltung 2 einen Filter 9 aufweisen, um störende Frequenzen der vom Stromnetz 1 bereitgestellten Wechselspannung zu eliminieren.

Handelt es sich um ein zweiphasiges Stromnetz 1, weist die Eingangsschaltung 2 die Topologie gemäß Figur 3a und 3b auf. Je Phase L1, L2 ist ein bidirektional sperrfähiges Schaltelement S_{B1}, S_{B2} vorgesehen, während optional zusätzlich das Freilaufschaltelement S_{BFr} vorgesehen ist.

Handelt es sich um ein einphasiges Stromnetz 1, sind gemäß Figur 4 lediglich zwei bidirektional sperrfähige Schaltelemente S_{B1}, S_{BFR} vorgesehen, wenn die Transformatorschaltung 4 den Serienresonanzkreis 8 aufweist. Im Falle einer Ansteuerung ohne Resonanzwandlerfunktion, beispielsweise bei Vorsehen einer klassischen Dual-Active-Bridge (DAB), ist lediglich das einzige bidirektional steuerbare Schaltelement S_{B1} vorgesehen. Im einphasigen Fall können die netzseitigen Klemmen L und N vertauscht werden, ohne dass die Funktion verloren geht, beide Varianten werden adressiert.

Die netzseitige Eingangsschaltung 2 kann bei Vorliegen eines einphasigen Netzes 1, bei der ausschließlich eine Wechselspannung des Netzes 1 an einem Eingang der netzseitigen Eingangsschaltung 2 anliegt, ein einziges bidirektional sperrfähiges Schaltelement S_{B1} aufweisen, wobei das bidirektional sperrfähige Schaltelement S_{B1} mit einem Anschluss mit einer ersten Ausgangsklemme A der Eingangsschaltung 2 und mit einem anderen Anschluss mit dem Netz 1 verbunden ist.

Vorzugsweise weist die Eingangsschaltung 2 nicht nur dieses bidirektional sperrfähige Schaltelement S_{B1}, sondern zusätzlich ein weiteres bidirektional sperrfähigen Schaltelement S_{BFr} auf, wobei ein erster Anschluss des Weiteren bidirektional sperrfähigen Schaltelementes S_{BFr} mit der ersten Ausgangsklemme A der Eingangsschaltung 2 und ein zweiter Anschluss des Weiteren bidirektional sperrfähigen Schaltelementes S_{BFr} mit einer zweiten Ausgangsklemme B der Eingangsschaltung 2 verbunden ist. Die zweite Ausgangsklemme B der Eingangsschaltung 2 ist mit dem Netz 1 und mit dem zweiten Anschluss des zweiten bidirektional sperrfähigen Schaltelementes S_{BFr} verbunden.

Die bidirektional sperrfähigen Schaltelemente S_{B1}, S_{B2}, S_{B3}, S_{BFr} können beispielsweise auf Basis eines Galliumnitrid-Halbleiterbausteins ausgebildet sein, der einen Substratanschluss und zwei Gateanschlüsse sowie zwei Sourceanschlüsse aufweist. Das Substrat ist hierbei dynamisch verbunden mit der Source über geringe Potentialunterschiede, die über eine Spannungssteuerung auf das Potential des ersten Sourceanschlusses S₁ und/oder des zweiten Sourceanschlusses S₂ gebracht werden kann, s. Figur 4. In Abhängigkeit von dem angelegten Potential an dem ersten Gate G1 und dem zweiten Gate G2 wird der Stromfluss entweder von der ersten Source S₁ zu der zweiten Source S₂ oder umgekehrt von der zweiten Source S₂ zu der ersten Source S1 unterbrochen. Das bidirektional sperrfähige Schaltelement ersetzt somit zwei herkömmliche unidirektional sperrfähige back-to-back verschaltete Schaltelemente.

Wie bereits oben erwähnt, weist die Leistungswandlervorrichtung lediglich einen einzigen Transformator 4' innerhalb der Transformatorschaltung 4 auf, der an die Ausgangsklemmen A, B der Eingangsschaltung 2 gekoppelt ist, und zwar unabhängig von der Anzahl der Phasen in der Eingangsschaltung 2. Der Transformator 4' wird bei einer relativ hohen Frequenz betrieben, wobei die anderen Bauteile der Leistungswandlervorrichtung als Dual-Active-Bridge (DAB) oder Resonanzwandler arbeiten kann.

Weist die Transformatorschaltung 4 gemäß Figur 6 nicht nur den Transformator 4', sondern auch den Serienschwingkreis 8 aus Kondensator C_{RES} und Induktor L_{RES} auf, weist die Eingangsschaltung 2 das Freilaufschaltelement S_{BFR} auf. Die Ansteuerschaltung 7 weist solche auf die bidirektional steuerbaren Schaltelemente S_{B1}, S_{B2} und gegebenenfalls S_{S3} sowie S_{BFR} einerseits und/oder auf die Schaltelemente der Ausgangsschaltung 7 andererseits wirkende Ansteuermittel auf, dass ein vorgegebenes Spannungsübertragungsverhältnis m erzeugt wird, wobei der Resonanzstrom I_{RES} mittels einer Toleranzbandregelung gesteuert wird.

Die Erfindung ermöglicht somit das Vorsehen einer einzigen Wandlerstufe. Die Kosten können reduziert werden durch Verringerung der Anzahl der Bauteile im Leistungspfad sowie der Ansteuerung, sowie Verringerung des Kühlaufwandes.

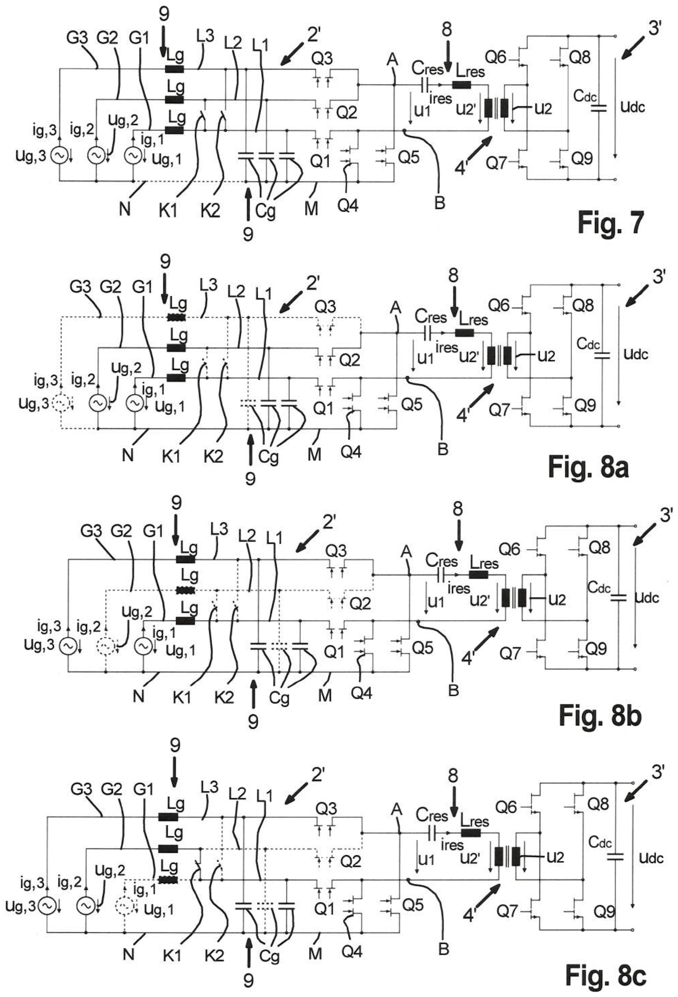

Nach einer weiteren Ausführungsform der Erfindung gemäß Figur 7 weist eine Leistungswandlervorrichtung im Unterschied zu dem vorhergehenden Ausführungsbeispiel eine Eingangsschaltung 2' auf, die zum einen fünf bidirektional sperrfähige Schaltelemente Q1, Q2, Q3, Q4 aufweist und zum anderen zwei Zustandsschalter K1, K2 aufweist. An die Eingangsschaltung 2' schließt sich lastseitig der Schwingkreis 8 an. Die Eingangsspannung U₁ des Schwingreises 8 ist zugleich die Ausgangsspannung der Eingangsschaltung 2'. Der Schwingkreis 8 ist mit einer Primärwicklung des Transformators 4' verbunden. Eine Sekundärwicklung des Transformators 4' ist mit der lastseitigen Ausgangsschaltung 3 verbunden.

Ein erstes bidirektional sperrfähiges Schaltelement Q1 verbindet einen Netzanschluss G1 einer ersten Phase L1 mit einer ersten Ausgangsklemme B der Eingangsschaltung 2'. Ein zweites bidirektional sperrfähiges Schaltelement Q2 verbindet einen Netzanschluss G2 einer zweiten Phase L2 mit einer zweiten Ausgangsklemme A der Eingangsschaltung 2'. Ein drittes bidirektional sperrfähiges Schaltelement Q3 verbindet einen Netzanschluss G3 einer dritten Phase L3 mit der zweiten Ausgangsklemme A der Eingangsschaltung 2'. Ein viertes bidirektional sperrfähiges Schaltelement Q4 verbindet die erst Ausgangsklemme B mit Masse bzw. einem optionalen Nullleiter N. Ein fünftes bidirektional sperrfähiges Schaltelement Q5 verbindet die zweite Ausgangsklemme A-mit der Masse bzw. dem optional vorgesehenen Nullleiter N.

Vorteilhaft ist es grundsätzlich beliebig, welcher der Netzanschlüsse G1,G2;G3 an welche Phase L1, L2, L3 der Eingangsschaltung 2' geschaltet wird. Eine falsche Verpolung beim Anschließen der Eingangsschaltung 2' an das dreiphasige Netz kann somit nicht auftreten.

Ein erster Zustandsschalter K1 und ein zweiter Zustandsschalter K2 befinden sich netzseitig der genannten bidirektional sperrfähigen Schaltelemente Q1, Q2, Q3, Q4, Q5, und zwar im vorliegenden Ausführungsbeispiel zwischen Induktivitäten L_{g} und Kapazitäten C_{g} des Filters 9.

Nach einer nicht dargestellten alternativen Ausführungsform können die Zustandsschalter K1, K2 auch netzseitig der Induktivitäten L_{g} des Filters 9 angeordnet sein.

Die Netzanschlüsse G1, G2, G3 der jeweiligen Phasen L1, L2, L3 können auch als netzseitige Phaseneingänge G1, G2, G3 bezeichnet werden.

Mittels der Ansteuerschaltung 7 sind die Zustandsschalter K1, K2 entweder derart geschaltet, dass sie entweder offen oder geschlossen sind. Vorzugsweise sind die Zustandsschalter K1, K2 als Relais ausgebildet. Vorteilhaft weisen diese Schalter keine Hochfrequenzbelastung auf.

Ist die Eingangsschaltung 2' an alle drei netzseitigen Phaseneingänge G1, G2, G3 angeschlossen, wie es in Figur 7 dargestellt ist, befinden sich der erste Zustandsschalter K1 und der zweite Zustandsschalter K2 in einem ersten Schaltzustand, in dem die Zustandsschalter K1, K2 offen geschaltet sind, so dass zwischen den Phasen L1, L2, L3 keine elektrische Verbindung vorliegt.

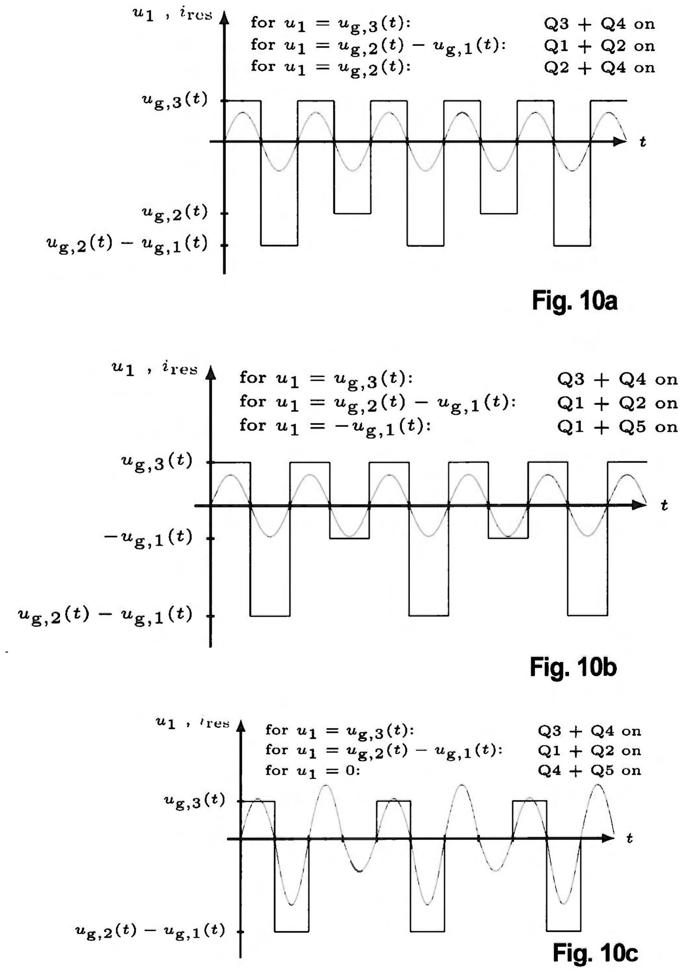

Die bidirektional sperrfähigen Schaltelemente Q1, Q2, Q3, Q4, Q5 werden mittels der Ansteuerschaltung 7 derart angesteuert, dass die Eingangsspannung U₁ und der Resonanzstrom I_{RES} die Verläufe gemäß den Figuren 10a, 10b, 10c aufweisen.

Soll die Leistungswandlervorrichtung in einem zweiphasigen Betrieb eingesetzt werden, werden der erste Zustandsschalter K1 und der zweite Zustandsschalter K2 in einen zweiten Schaltzustand versetzt, so dass eine verkettete Eingangsspannung U₁₂ gemäß Figur 8a, eine verkettete Eingangsspannung U₁₃ gemäß Figur 8b und eine verkettete Eingangsspannung U₂₃ gemäß Figur 8c anliegen kann. Ist die Eingangsschaltung 2' an dem Netzanschluss U₁ der ersten Phase L1 und an dem Netzanschluss U₂ der zweiten Phase L2 angeschlossen, ist der erste Zustandsschalter K1 offengeschaltet, so dass keine elektrische Verbindung zwischen der ersten Phase L1 und der zweiten Phase L2 besteht. Der Schaltzustand des zweiten Zustandsschalters K2 kann beliebig sein, da die dritte Phase L3 nicht angeschlossen ist.

Soll die Eingangsschaltung 2' an den Netzanschluss U₁ der ersten Phase L1 und den Netzanschluss U₃ der dritten Phase L3 gemäß Figur 8b angeschlossen sein, ist der zweite Zustandsschalter K2 offengeschaltet, d. h. es liegt keine elektrische Verbindung zwischen der ersten Phase L1 und der dritten Phase L3 vor. Der Zustand des ersten Zustandsschalters K1 kann beliebig sein, da die zweite Phase L2 nicht angeschlossen ist.

Soll die Eingangsschaltung 2' an dem Netzanschluss U₂ der zweiten Phase L2 und dem Netzanschluss U₃ der dritten Phase L3 gemäß Figur 8 angeschlossen sein, ist der erste Zustandsschalter K1 geschlossen und der zweite Zustandsschalter (K2) offen geschaltet, so dass die zweite Phasenleitung L2 mit der Ausgangsklemme B verbunden ist (Fig 8c); alternativ ist der erste Zustandsschalter K1 offen und der zweite Zustandsschalter (K2) geschlossen geschaltet, so dass die dritte Phasenleitung L3 mit der Ausgangsklemme B verbunden ist (ohne Bild);. Somit ist sichergestellt, dass - wie bei den anderen Varianten gemäß Figur 8a und Figur 8b - der Netzanschluss der einen Phase mit der ersten Ausgangsklemme B und der Netzanschluss der anderen Phase mit der zweiten Ausgangsklemme A verbunden ist.

Die gestrichelt gezeichneten Linien zeigen an, dass die entsprechenden Leitungen nicht wirksam sind. Somit ergibt sich aus Figur 8a, dass das dritte bidirektional sperrfähige Schaltelement Q3, gemäß Figur 8b das zweite bidirektional sperrfähige Schaltelement Q2 und gemäß Figur 8c das erste bidirektional sperrfähige Schaltelement Q1 nicht wirksam sind. Die anderen bidirektional sperrfähigen Schaltelemente Q4, Q5 werden derart angesteuert, dass entsprechend sinusförmige Resonanzströme I_{RES} fließen, wobei sie pulsierend bzw. "atmend" sind, d. h. die Amplitude des Resonanzstromes IRES periodisch ansteigt und abnimmt.

Soll die Leistungswandlervorrichtung einphasig betrieben werden, wird der erste Zustandsschalter K1 und der zweite Zustandsschalter K2 in einem dritten Schaltzustand versetzt, so dass bei anzuschließender erster Phase L1 an einen ersten Netzanschluss G1 des Dreiphasennetzes oder einer zweiten Phase L2 an einem zweiten Netzanschluss G2 des Dreiphasennetzes oder einer dritten Phase L3 an einem dritten Netzanschluss G3 des Dreiphasennetzes zum einen das erste bidirektional sperrfähige Schaltelement Q1 mit der ersten Ausgangsklemme B und zum anderen das zweite bidirektional sperrfähige Schaltelement Q2 oder das dritte bidirektional sperrfähige Schaltelement Q3 mit der zweiten Ausgangsklemme A verbunden ist.

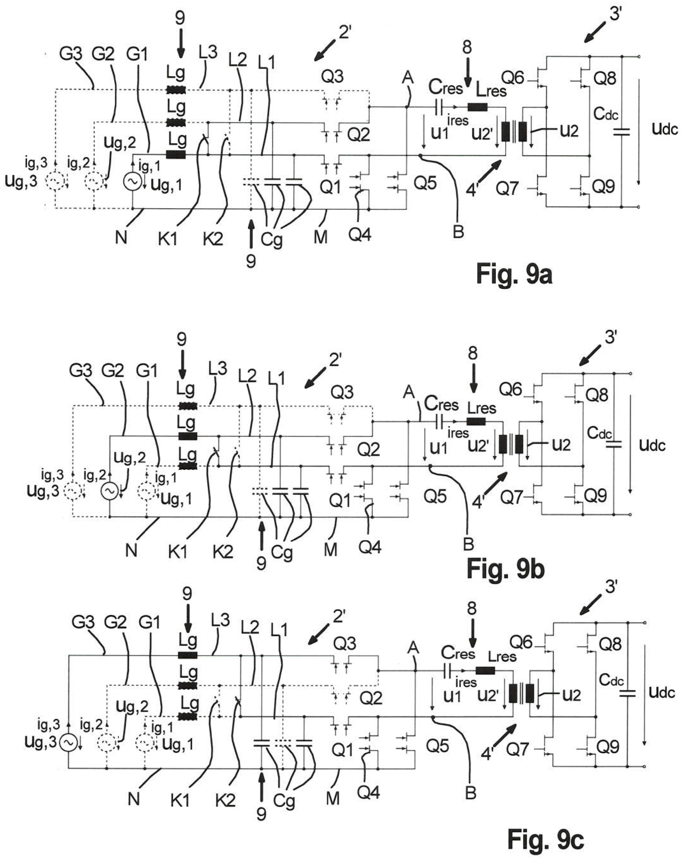

Ist die Eingangsschaltung 2' an dem ersten Netzanschluss G1 der ersten Phase L1 gemäß Figur 9a angeschlossen, ist der erste Zustandsschalter K1 geschlossen geschaltet, so dass der Eingangsstrom ig,₁ zum einen direkt über das erste bidirektional sperrfähige Schaltelement Q1 an die erste Ausgangsklemme B einerseits und über das zweite bidirektional sperrfähige Schaltelement Q2 über den eingeschalteten Zustandsschalter K1 an die zweite Ausgangsklemme A fließen kann. Der Schaltzustand des zweiten Zustandsschalters K2 kann beliebig sein. Alternativ kann der zweite Zustandsschalter K2 eingeschaltet sein und der erste Zustandsschalter K1 beliebig eingestellt werden, dann kann der Strom ig,₁ über das dritte bidirektional sperrfähige Schaltelement Q3 an die Ausgangsklemme A fließen. Es versteht sich, dass in diesem Fall das zweite bidirektional sperrfähige Schaltelement Q2 nicht angesteuert wird.

Ist die Eingangsschaltung 2' an dem zweiten Netzanschluss G2 der zweiten Phase L2 gemäß Figur 9b angeschlossen, ist der erste Zustandsschalter K1 im geschlossenen Zustand, so dass der Strom ig,₂ zum einen über den eingeschalteten Zustandsschalter K1 über das erste bidirektional sperrfähige Schaltelement Q1 an die erste Ausgangsklemme B und zum anderen direkt über das zweite bidirektional sperrfähige Schaltelement Q2 an die zweite Ausgangsklemme A fließen kann. Der Schaltzustand des zweiten Zustandsschalters K2 kann beliebig sein.

Ist die Eingangsschaltung 2' an dem dritten Netzanschluss G2 der dritten Phase L3 des Dreiphasennetzes gemäß Figur 9c angeschlossen, befindet sich der zweite Zustandsschalter K2 im geschlossenen Zustand, so dass zum einen ein Strom ig,₃ von dem dritten Netzanschluss G3 über den geschlossenen Zustandsschalter K2 über das erste bidirektional sperrfähige Schaltelement Q1 zu der ersten Ausgangsklemme B und zum anderen direkt über das dritte bidirektional sperrfähige Schaltelement Q3 an die zweite Ausgangsklemme A fließen kann. Der Schaltzustand des ersten Zustandsschalters K1 kann beliebig sein.

Vorteilhaft ermöglicht die Erfindung somit die den jeweils bidirektional schaltbaren Schaltelementen Q1, Q2, Q3 zugeordneten Eingangsleitungen der Eingangsschaltung 2' beliebig an die Netzanschlüsse G1 und/oder G2 und/oder G3 angeschlossen werden können. Die Leitung L1, die das erste bidirektionale Schaltelement Q1 aufweist, muss also nicht unbedingt an den ersten Netzanschluss G1 des Dreiphasennetzes angeschlossen werden. Dasselbe gilt für die anderen Leitungen L2 und/oder L3. Eine unerwünschte falsche Verpolung beim Anschließen der Eingangsschaltung 2' an das dreiphasige Netz kann somit nicht auftreten. Dasselbe gilt auch beim Anschließen der Eingangsschaltung 2' an das zweiphasige oder einphasige Netz.

Wenn die Leistungswandlervorrichtung dafür ausgelegt sein soll, ausschließlich an einem Dreiphasennetz angeschlossen zu werden, kann auf den ersten Zustandsschalter K1 und den zweiten Zustandsschalter K2 verzichtet werden. Die Leistungswandlervorrichtung kann somit der Schaltung gemäß Figur 7 entsprechend mit der Änderung, dass die Zustandsschalter K1, K2 entfernt sind.

Aus den Figuren 7 bis 9c ist ersichtlich, dass eine Ausgangsschaltung 3', die sekundärseitig an dem Transformator 4' angeschlossen ist, als eine Vollbrückenschaltung ausgebildet ist mit Schaltelementen Q6, Q7, Q8, Q9. Eine Ausgangsspannung U_{DC} liegt an einer Kapazität C_{DC} an.

Nach einer nicht dargestellten alternativen Ausführungsform der Erfindung kann die Ausgangsschaltung 3' auch als eine Halbbrückenschaltung ausgebildet sein.

Aus den Figuren 8a bis 8c ist ersichtlich, dass bei zweiphasigem Anschluss der Leistungswandlervorrichtung nur der erste Zustandsschalter K1 erforderlich ist. Der zweite Zustandsschalter K2 kann entfallen. Bei den Varianten gemäß Figur 8a und Figur 8b befindet sich der erste Zustandsschalter K1 im Schaltzustand "offen". In der Schaltungsvariante gemäß Figur 8c befindet sich der erste Zustandsschalter K1 im Schaltzustand "geschlossen".

Wie aus den Figuren 9a bis 9c für den einphasigen Anschluss der Leistungswandlervorrichtung zu erkennen ist, wird zur Verfügungstellung aller drei Varianten der erste Zustandsschalter K1 und der zweite Zustandsschalter K2 benötigt. Gemäß der Ausführungsform nach Figur 9a und Figur 9b muss der erste Zustandsschalter K1 den Schaltzustand "geschlossen" einnehmen. In der Ausführungsform gemäß Figur 9c muss sich der zweite Zustandsschalter K2 im Schaltzustand "geschlossen" befinden.

Würde für den einphasigen Netzanschluss lediglich der Anschluss an den ersten Netzanschluss G1 und den zweiten Netzanschluss G2 in Frage kommen, könnte auf den zweiten Zustandsschalter K2 verzichtet werden, da nur der erste Zustandsschalter K1 benötigt wird. Somit könnte mit lediglich einem einzigen Zustandsschalter K1 alle drei Varianten des zweiphasigen Anschlusses (8a, 8b, 8c) und zwei Varianten (9a, 9b) des einphasigen Anschlusses realisiert werden.

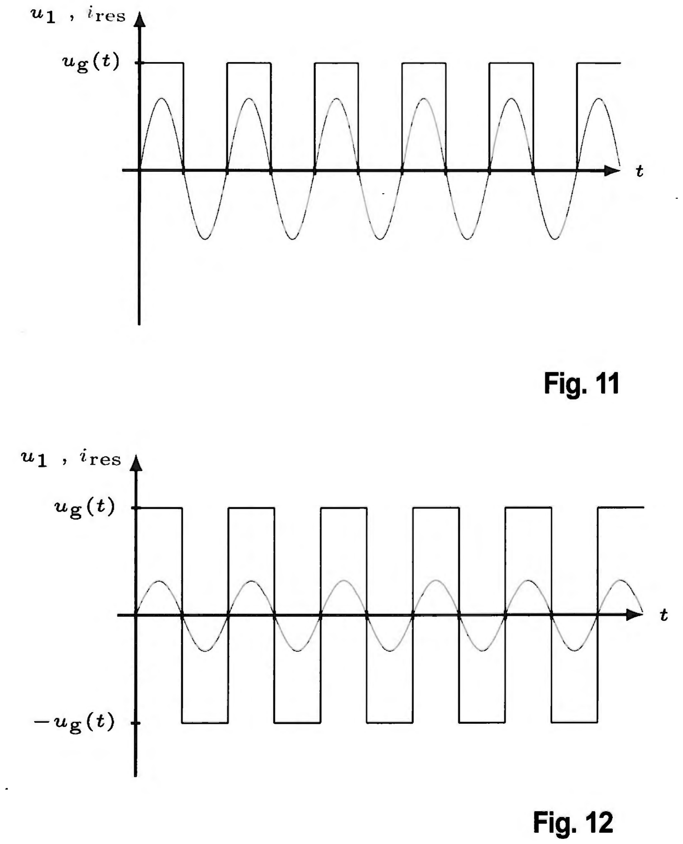

Der Spannungsverlauf der Eingangsspannung U₁ und des Resonanzstromes I_{RES} ist in Figur 12 der einphasigen Topologie gemäß den Figuren 9a bis 9c ist in Figur 12 dargestellt. Im Vergleich zu einer Halbbrückenschaltung gemäß Figur 4 ist die Effektivstrombelastung halbiert, wie durch Vergleich mit Figur 11 zu ersehen ist.

## Patentansprüche

1. Leistungswandlervorrichtung aufweisend:
- eine netzseitige Eingangsschaltung (2, 2') mit einer Anzahl von bidirektional sperrfähigen Schaltelementen (S_{B1}, S_{B2}, S_{B3}, S_{BFR}, Q1, Q2, Q3, Q4, Q5),
- eine lastseitige Ausgangsschaltung (3) mit einer Anzahl von Halbleitern (S1, S2; Q6, Q7, Q8, Q9),
- eine Transformatorschaltung (4), der primärseitig mit der Eingangsschaltung (2, 2') und sekundärseitig mit der lastseitigen Ausgangsschaltung (3) gekoppelt ist,
- eine Ansteuerschaltung (7) zur Ansteuerung der bidirektional sperrfähigen Schaltelemente (S_{B1}, S_{B2}, S_{B3}, S_{SFr}; Q1, Q2, Q3, Q4, Q5) der Eingangsschaltung (2, 2') und der steuerbaren Schaltelemente (S1, S2; Q6, Q7, Q8, Q9) der Ausgangsschaltung (3), so dass eine netzseitige Wechselgröße in eine lastseitige Gleichgröße und/oder vice versa umgewandelt wird,
**dadurch gekennzeichnet, dass** die netzseitige Eingangsschaltung fünf bidirektionale Schaltelemente (Q1, Q2, Q3, Q4, Q5) aufweist,
- wobei ein Netzanschluss (G1) einer ersten Phase (L1) über ein erstes bidirektionales Schaltelement (Q1) mit einer ersten Ausgangsklemme (B) der Eingangsschaltung (2') verbunden ist,
- wobei weitere Netzanschlüsse (G2, G3) zweier Phasen (L2, L3) jeweils über ein bidirektionales Schaltelement (Q2, Q3) mit einer zweiten Ausgangsklemme (A) der Eingangsschaltung (2') verbunden sind,
- wobei ein viertes bidirektionales Schaltelement (Q4) die erste Ausgangsklemme (B) mit einer Masse (M) oder einem Neutralleiter (N) und ein fünftes bidirektionales Schaltelement (Q5) die zweite Ausgangsklemme (A) mit der Masse (M) oder mit dem Neutralleiter (N) verbindet,
- dass die netzseitige Eingangsschaltung (2') eine Anzahl von Zustandsschaltern (K1, K2) aufweist, wobei ein erster Zustandsschalter (K1) zwischen der ersten Phase (L1) und der zweiten Phase (L2) und/oder wobei ein zweiter Zustandsschalter (K2) zwischen der ersten Phase (L1) und der dritten Phase (L3) angeordnet ist,
- und dass der erste Zustandsschalter (K1) und/oder der zweite Zustandsschalter (K2) derart schaltbar sind, dass
- in einem ersten Schaltzustand die Eingangsschaltung (2') an einem dreiphasigen Netz (Ug,1, Ug,2, Ug,3) betreibbar ist oder
- in einem zweiten Schaltzustand die Eingangsschaltung (2') an einem zweiphasigen Netz (Ug,1, Ug,3; Ug,2, Ug,3; Ug,1, Ug,2) betreibbar ist oder
- in einem dritten Schaltzustand die Eingangsschaltung (2') an einem einphasigen Netz (Ug,1; Ug,2; Ug,3) betreibbar ist.

2. Leistungswandlervorrichtung nach Anspruch 1, **dadurch gekennzeichnet, dass** bei Anschluss der Eingangsschaltung (2') an dem dreiphasigen Netz der erste Zustandsschalter (K1) und der zweite Zustandsschalter (K2) offengeschaltet sind.

3. Leistungswandlervorrichtung nach Anspruch 1 oder 2, **dadurch gekennzeichnet, dass** bei Anschluss der Eingangsschaltung (2') an dem zweiphasigen Netz (Ug,1, Ug,3; Ug,2, Ug,3; Ug,1, Ug,2) der erste Zustandsschalter (K1) und der zweite Zustandsschalter (K2) in dem zweiten Schaltzustand derart geschaltet sind, dass
- bei Anschluss der Eingangsschaltung (2') an einem ersten Netzanschluss (G1) und einem zweiten Netzanschluss (G2) der erste Zustandsschalter (K1) offen geschaltet ist (Fig. 8a),
- bei Anschluss der Eingangsschaltung (2') an dem ersten Netzanschluss (G1) und einem dritten Netzanschluss (G3) der zweite Zustandsschalter (K2) offen geschaltet ist (Fig. 8b),
- bei Anschluss der Eingangsschaltung (2') an dem zweiten Netzanschluss (G2) und an dem dritten Netzanschluss (G3) der erste Zustandsschalter (K1) geschlossen und der zweite Zustandsschalter (K2) offen geschaltet ist (Fig. 8c) oder der erste Zustandsschalter (K1) offen und der zweite Zustandsschalter (K2) geschlossen geschaltet ist (ohne Bild).

4. Leistungswandlervorrichtung nach einem der Ansprüche 1 bis 3, **dadurch gekennzeichnet, dass** bei Anschluss der Eingangsschaltung (2') an ein einphasiges Netzes der erste Zustandsschalter (K1) und der zweite Zustandsschalter (K2) in dem dritten Schaltzustand derart angesteuert sind, dass
- bei Anschluss der Eingangsschaltung (2') an den ersten Netzanschluss (G1) der ersten Phase (L1) der erste Zustandsschalter (K1) geschlossen geschaltet ist (Fig. 9a) oder der zweite Zustandsschalter (K2) geschlossen geschaltet ist,
- bei Anschluss der Eingangsschaltung (2') an den zweiten Netzanschluss (G2) der zweiten Phase (L2) der erste Zustandsschalter (K1) geschlossen geschaltet ist (Fig. 9b),
- bei Anschluss der Eingangsschaltung (2') an den dritten Netzanschluss (G3) der dritten Phase (L3) der zweite Zustandsschalter (K2) geschlossen geschaltet ist(Fig. 9c).

5. Leistungswandlervorrichtung nach einem der Ansprüche 1 bis 4, **dadurch gekennzeichnet, dass** der erste Zustandsschalter (K1) und der zweite Zustandsschalter (K2) jeweils als ein Relais ausgebildet sind.

6. Leistungswandlervorrichtung nach einem der Ansprüche 1 bis 5, **dadurch gekennzeichnet, dass** der erste Zustandsschalter (K1) und der zweite Zustandsschalter (K2) netzstromseitig oder transformatorseitig bezüglich Induktivitäten (L_{g}) des Filters (9) angeordnet sind.

7. Leistungswandlervorrichtung aufweisend:
- eine netzseitige Eingangsschaltung (2, 2') mit einer Anzahl von bidirektional sperrfähigen Schaltelementen (S_{B1}, S_{B2}, S_{B3}, S_{BFR}, Q1, Q2, Q3, Q4, Q5), die an eine dreiphasiges Netz (Ug,1, Ug,2, Ug,3) anschließbar ist,
- eine lastseitige Ausgangsschaltung (3) mit einer Anzahl von Halbleitern (S1, S2; Q6, Q7, Q8, Q9),
- eine Transformatorschaltung (4), der primärseitig mit der Eingangsschaltung (2, 2') und sekundärseitig mit der lastseitigen Ausgangsschaltung (3) gekoppelt ist,
- eine Ansteuerschaltung (7) zur Ansteuerung der bidirektional sperrfähigen Schaltelemente (S_{B1}, S_{B2}, S_{B3}, S_{SFr}, Q1, Q2, Q3, Q4, Q5) der Eingangsschaltung (2, 2') und der steuerbaren Schaltelemente (S1, S2; Q6, Q7, Q8, Q9) der Ausgangsschaltung (3), so dass eine netzseitige Wechselgröße in eine lastseitige Gleichgröße und/oder vice versa umgewandelt wird
**dadurch gekennzeichnet, dass** die netzseitige Eingangsschaltung fünf bidirektionale Schaltelemente (Q1, Q2, Q3, Q4, Q5) aufweist,
- wobei ein Netzanschluss (G1) einer ersten Phase (L1) über ein erstes bidirektionales Schaltelement (Q1) mit einer ersten Ausgangsklemme (B) der Eingangsschaltung (2') verbunden ist,
- wobei weitere Netzanschlüsse (G2, G3) zweier Phasen (L2, L3) jeweils über ein bidirektionales Schaltelement (Q2, Q3) mit einer zweiten Ausgangsklemme (A) der Eingangsschaltung (2') verbunden sind,
- wobei ein viertes bidirektionales Schaltelement (Q4) die erste Ausgangsklemme (B) mit einer Masse (M) oder einem Neutralleiter (N) und ein fünftes bidirektionales Schaltelement (Q5) die zweite Ausgangsklemme (A) mit der Masse (M) oder mit dem Neutralleiter (N) verbindet.

8. Leistungswandlervorrichtung nach einem der Ansprüche 2 bis 7, **dadurch gekennzeichnet, dass** die Transformatorschaltung (4) einen einphasiger Transformator (4') aufweist.

9. Leistungswandlervorrichtung nach einem der Ansprüche 1 bis 8, **dadurch gekennzeichnet, dass** die Halbleiter (S1, S2) der Ausgangsschaltung (3, 3') als unidirektional sperrfähige Schaltelemente (S1, S2; Q6, Q7, Q8, Q9) oder als bidirektional sperrfähige Schalteelemente in Form von jeweils monolithische Bausteine mit zwei Gate-Anschlüssen ausgebildet sind.

10. Leistungswandlervorrichtung nach einem der Ansprüche 1 bis 9, **dadurch gekennzeichnet, dass** die netzseitige Eingangsschaltung (2, 2') einen Filter (9) aufweist, das zwischen dem Netzanschluss der Eingangsschaltung (2) und dem zweiten Anschluss der bidirektional sperrfähigen Schaltelemente (S_{B1}, S_{B2}, S_{B3}, Q1, Q2, Q3, Q4, Q5) angeordnet ist.

11. Leistungswandlervorrichtung nach einem der Ansprüche 1 bis 10, **dadurch gekennzeichnet, dass** zwischen der Eingangsschaltung (2, 2') und der Ausgangsschaltung (3, 3') Induktivitäten (L_{RES}) und/oder Kapazitäten (5, C_{RES}) angeordnet sind, derart, dass die steuerbaren Schaltelemente (S_{S1}, S_{B2}, S_{B3}, S_{SFr}, Q1, Q2, Q3, Q4, Q5)) der Eingangsschaltung (2, 2') und die steuerbaren Schaltelemente (S₁, S₂, Q6, Q7, Q8, Q9) der Ausgangsschaltung (3, 3') so ansteuerbar sind, dass die Leistungswandlervorrichtung als eine Dual-Active-Bridge (DAB) oder als ein Resonanzwandler arbeitet.

12. Leistungswandlervorrichtung nach einem der Ansprüche 1 bis 11, **dadurch gekennzeichnet, dass** zwischen der Eingangsschaltung (2, 2') und der Transformatorschaltung (4) ein Schwingkreis (8) angeordnet ist enthaltend eine Resonanzinduktivität (L_{RES}) und optional eine Resonanzkapazität (C_{RES}).

13. Leistungswandlervorrichtung nach einem der Ansprüche 1 bis 12, **dadurch gekennzeichnet, dass** eine Schaltfrequenz der bidirektional sperrfähigen Schaltelemente (S_{B1}, S_{B2}, S_{B3}, S_{BFr}, Q1, Q2, Q3, Q4, Q5) der Eingangsschaltung (2, 2') und eine Schaltfrequenz der unidirektional sperrfähigen Schaltelemente (S1, S2; Q6, Q7, Q8, Q9) der Ausgangsschaltung (3, 3') einer Resonanzfrequenz (f_{RES}) des Serienresonanzkreises (8) entspricht oder nahe der Resonanzfrequenz (f_{RES}) des Serienresonanzkreises (8) liegt, wobei die Schaltfrequenz um ein Vielfaches größer ist als eine Netzfrequenz (f_{N}).

14. Leistungswandlervorrichtung nach einem der Ansprüche 1 bis 13, **dadurch gekennzeichnet, dass** die Schaltelemente (S₁, S₂; Q6, Q7, Q8, Q9) der Ausgangsschaltung (3, 3') derart angesteuert sind, dass eine Ausgangsspannung (U₂) des Serienresonanzkreises (8) einen positiven Spannungswert, eine negative Spannung und einen Nullwert aufweist.

15. Leistungswandlervorrichtung nach einem der Ansprüche 1 bis 14, **dadurch gekennzeichnet, dass** die Schaltelemente (S_{B1}, S_{B2}, S_{B3}, S_{BFR}, Q1, Q2, Q3, Q4, Q5) der Eingangsschaltung (2, 2') derart angesteuert sind, dass eine Eingangsspannung (U₁) des Serienresonanzkreises (8) einen von den Netzspannungen (Ug,1, Ug,2, Ug,3) abhängigen positiven oder negativen Spannungswert oder einen Nullwert aufweist.

16. Leistungswandlervorrichtung nach einem der Ansprüche 1 bis 15, **dadurch gekennzeichnet, dass** die Ausgangsschaltung (3, 3') identisch zur Eingangsschaltung (2, 2') bidirektional sperrfähige Schaltelementen aufweist, so dass ein isolierender AC/AC Wandler realisiert ist.

17. Leistungswandlervorrichtung nach einem der Ansprüche 1 bis 16, **dadurch gekennzeichnet, dass** Ausgangsschaltung (3, 3') eine Brückenschaltung mit Dioden oder aktiven Halbleiterbausteinen ohne bidirektional sperrfähige Schaltelemente aufweist, insbesondere eine Vollbrückenschaltung, eine Halbbrückenschaltung oder eine Zweipuls-Mittelpunktschaltung mit mittelpunktangezapftem HF-Transformator.
